# EUROPÄISCHE PATENTSCHRIFT

(11) **EP 2 796 232 B1**
(45) Veröffentlichungstag und Bekanntmachung des Hinweises auf die Patenterteilung: **01.08.2018**
(21) Anmeldenummer: 14165542.3
(22) Anmeldetag: 23.04.2014
(51) Int. Cl.: B23B 5/16, B26D 3/16

(54) **Schälgerät**
Peeling device
Appareil d'écroûtage

(30) Priorität: 24.04.2013 DE 102013104153
(43) Veröffentlichungstag der Anmeldung: 29.10.2014
(73) Patentinhaber: Aquatherm Besitzgesellschaft mbH & Co. KG, 57439 Attendorn (DE)
(72) Erfinder: Rosenberg, Maik, 57439 Attendorn (DE)
(74) Vertreter: Stoffregen, Hans-Herbert

(56) Entgegenhaltungen:
- US-A- 4 691 600
- US-A1- 2005 175 421
- US-A1- 2008 075 552

## Beschreibung

Die Erfindung bezieht sich auf eine Vorrichtung zum zumindest teilweisen Abtragen der Außenumfangsfläche eines zylindrischen Körpers, insbesondere eines aus Kunststoff bestehenden Rohres, umfassend ein insbesondere hohlzylindrisches Gehäuse, dessen Wandung einen den Körper axial verschiebbar aufnehmenden zylindrischen Innenraum begrenzt, zumindest eine Durchbrechung in der Wandung sowie ein der Durchbrechung zugeordnetes Schneidelement, das sich mit einem Schneidabschnitt in den Innenraum hinein erstreckt, wobei das Schneidelement in Vorderansicht eine Scheiben- oder Ringgeometrie aufweist und über ein in Längsrichtung des Schneidelements verlaufendes Befestigungselement mit dem Gehäuse verbunden und durch Drehen um seine Längsachse in gewünschter Position mit dem Gehäuse verbindbar ist.

Um z. B. Kunststoffrohre mit einer Muffe oder einem Fitting zu verbinden wie zu verschweißen oder zu verkleben, ist es erforderlich, die äußere Schicht der Rohroberfläche durch einen Schälvorgang zu entfernen. Dies ist insbesondere für Schweißverbindungen erforderlich, um die durch Lichteinwirkung entstandene Oxidschicht zu entfernen.

Bekannte Schälgeräte weisen ein zylindrisches Gehäuse auf, in deren Umfangswandung ein oder mehrere quer zu der Längsachse des Gehäuses verlaufende Schlitze vorhanden sind, die von einem Schälmesser durchsetzt sind, das mit einem Abschnitt in den Innenraum hineinragt.

Die Höhe des Abschnitts gibt die Spantiefe vor. Durch die Schlitze gelangen die Späne nach außen. Ist ein Schälmesser stumpf geworden, so muss dieses ausgetauscht werden. Sodann müssen Probeschälungen durchgeführt werden, um eine korrekte Einstellung des Messers zu überprüfen. Der Innendurchmesser der entsprechenden Gehäuse ist gleich oder geringfügig größer als der Außendurchmesser der zu schälenden Rohre, wobei sich die Ovalität des Rohres auf das Schälergebnis überträgt. Um die Länge des abzuschälenden Bereichs vorzugeben, kann die Wandung des Körpers von einer Schraube durchsetzt sein, die als Anschlag dient.

Schälgeräte zum Abdrehen von Umfangsflächen rotationssymmetrischer Körper sind z. B. der DE 102 51 999 B4 oder der DE 10 2010 047 859 A1 zu entnehmen.

Die DE 10 2010 047 859 A1 bezieht sich auf ein Schälgerät, mittels dessen Material von einer Rohroberfläche abgetragen werden kann. Hierzu ist eine antreibbare Messerwalze vorgesehen, über der Schälklingen vorstehen. Das Schälgerät wird mittels Führungselementen, die seitlich die Messerwalze umgeben, auf ein Rohr aufgesetzt.

Gegenstand der DE 35 40 665 A1 ist eine Messerkombination zum Schälen von Wellen in einer Wellendrehmaschine mit einem umlaufenden Messerkopf. Dieser weist einen Messerhalter auf, auf dem ein Rundmesser sowie ein Dreiecksmesser befestigt sind. Das Rundmesser setzt sich aus Schneideinsätzen zusammen, die auf einem Grundkörper gelötet sind.

Ein Schälgerät mit einer zylindrischen Halterung zur Aufnahme eines Rohres ist der JP-2010094772 A zu entnehmen. Das Schälgerät weist einen in Längsrichtung der Aufnahme - und damit des Rohres - verlaufenden Arm auf, von dem ein Schälelement abragt.

Aus der US 2005/175421 A1 ist ein Schälgerät mit den Merkmalen des Oberbegriffs des Anspruchs 1 bekannt, das einen zylindrischen Körper aufweist, in dessen Innenraum ein eine Konusform aufweisendes Schneidelement hineinragt, um die Außenschicht eines Rohres abzutragen. Eine entsprechende Konstruktion ergibt sich aus der US 2008/075552 A1. Bei diesem Schälgerät sind die konusförmigen Schneidelemente in Aufnahmen angeordnet, in denen die Schneidelemente ohne zusätzliche Fixierelemente positioniert werden.

Ein Schälgerät mit einem hohlzylindrischen Körper mit konusförmigen Schneidelementen ist auch aus der US 4 691 600 A bekannt.

Der vorliegenden Erfindung liegt die Aufgabe zu Grunde, eine Vorrichtung der eingangs genannten Art so weiterzubilden, dass eine gleichbleibende Spantiefe beim Schälen erreichbar ist. Es soll problemlos die Außenumfangsfläche eines zylindrischen Körpers, insbesondere eines aus Kunststoff bestehenden Rohres, in gewünschtem Umfang abgetragen werden können, wobei nach dem Stumpfwerden des Abschnitts problemlos ein weiteres Abtragen möglich sein soll, ohne dass ein aufwendiges Nachjustieren des Schneidelementes erforderlich ist.

Nach einem weiteren Aspekt der Erfindung soll dann, wenn der zu schälende zylindrische Körper eine gewisse Ovalität aufweist, diese auf das Schälergebnis nicht übertragen werden.

Auch zielt ein Aspekt der Erfindung auf die Problematik ab, mit einfachen Maßnahmen das Gehäuse relativ zu dem zylindrischen Körper drehen zu können sowie eine definierte Schällänge zu erzielen.

Ein besonders hervorzuhebender Aspekt der Erfindung berücksichtigt eine gleichbleibende Spantiefe beim Schälen.

Zur Lösung eines oder mehrerer der zuvor angesprochenen Aspekte stellt die Erfindung eine Vorrichtung mit den Merkmalen des Anspruchs 1 bereit, wobei ein in Verstellrichtung des zylindrischen Körpers vor dem Schneidelement verlaufender Abschnitt des Innenraums einen Innendurchmesser D₂ aufweist, der in einen dritten Abschnitt übergeht, dessen innenraumseitige Begrenzung im Schnitt einen Kreisabschnitt bildet, dessen Umfang äquidistant zum Umfang des Schneidelements zumindest im Bereich des Schneidabschnitts verläuft.

Durch die Differenz des wirksamen Radius des Schneidelementes und des Kreisabschnitts des dritten Abschnitts des Gehäuses wird die Spantiefe beim Schälen vorgegeben. Somit wird eine gleichbleibende Spantiefe ermöglicht, wodurch wiederum eine gleichmäßige Oberflächenstruktur des zylindrischen Körpers wie Rohrs sichergestellt ist.

Insbesondere ist vorgesehen, das der dritte Abschnitt in seiner innenraumseitigen Begrenzung einen Radius r₃ und das Schneidelement an seiner die Schneide aufweisenden Stirnfläche einen Radius r₁ aufweisen, wobei insbesondere 0,85 r₁ ≤ r₃ ≤ 0,95 r₁ ist.

Die diesbezügliche geometrische Abstimmung erfolgt dadurch, dass Mittelunkt des im Schnitt einen Kreisabschnitt aufweisenden dritten Abschnitts und Mittelpunkt des Schneidabschnitts auf einem Kreis liegen, dessen Mittelpunkt auf der Längsachse des Gehäuses liegt.

Es wird ein in Draufsicht ring- bzw. scheibenförmiges Schneidelement benutzt, so dass dann, wenn ein Schälmesser- oder Schneidabschnitt stumpf geworden ist, durch Lösen des Befestigungselementes und Drehen des Schneidelementes und anschließendes Festziehen des Befestigungselementes ein neuer Schneidabschnitt zur Verfügung gestellt ist, der zum Schälen benutzt wird.

Vorzugsweise ist vorgesehen, dass das Schneidelement einstückig und insbesondere ein rotationssymmetrischer Körper ist und z. B. eine Hohlkonus-Geometrie aufweist, deren größere Grundfläche bzw. der Rand von dieser Schneide ist. Das Schneidelement wird durch ein entlang dessen Längsachse, die mit der Rotationsachse zusammenfällt, verlaufendes Befestigungselement z. B. mittels einer Schraube befestigt und um diese gedreht, um einen Schneid- oder Schälabschnitt zur Verfügung zu stellen, der in den Innenraum des Gehäuses ragt.

Um die Schneide eindeutig zu fixieren, ist vorzugsweise vorgesehen, dass die Durchbrechung von einer das Schneidelement aufnehmenden Aufnahme wie Flachsenkung bzw. Tasche begrenzt ist, an die passgenau das Schneidelement umfangsseitig angepasst ist.

Hierdurch erfolgt eine eindeutige Fixierung. Gleichzeitig ist die Tiefe des Schneidabschnitts, die in den Innenraum ragt, fest vorgegeben.

Die Längsachse der Durchbrechung verläuft insbesondere quer zur Längsachse des Gehäuses und durchsetzt dieses schräg, also quasi tangential. Die Durchbrechung kann eine hohlzylinder- oder schlitzförmige Geometrie aufweisen. Vorzugsweise sind drei Durchbrechungen gleichmäßig auf einem Kreis mit einem auf der Gehäuseachse liegenden Mittelpunkt vorgesehen.

Die Schneide kann aus präzisionsgesintertem Aluminium bestehen.

In besonders hervorzuhebender Ausgestaltung der Erfindung, die eigenerfinderischen Gehalt aufweist, ist vorzugsweise vorgesehen, dass ein in Verstellrichtung des Körpers vor dem Schneidelement verlaufender Abschnitt des Innenraums einen Durchmesser D₂ aufweist, der größer als Durchmesser des Innenraums im Eintrittsbereich ist, der einen Durchmesser D₁ aufweist.

Durch die diesbezügliche Dimensionierung erfolgt durch den Eintrittsbereich eine Führung des zylindrischen Körpers, wobei in dem einen größeren Innendurchmesser aufweisenden anschließenden Bereich ein "Entspannen" des Körpers in dessen Ausgangsposition, also in eine ggfs. vorhandene Ovalität erfolgen kann. Hierdurch ist sichergestellt, dass sodann beim Abtragen der Umfangsfläche eine optimale Rundheit des Schälergebnisses gewährleistet ist. Hierzu ist insbesondere auch vorgesehen, dass insgesamt drei gleichmäßig auf dem Umfang des Gehäuses verteilte Schneidelemente und diesen zugeordnete schlitzförmige Durchbrechungen vorgesehen sind, über die die Späne beim Schälen herausgeworfen werden können.

Ferner ist vorzugsweise vorgesehen, dass das Gehäuse ein Hohlzylinder ist bzw. eine Hohlzylindergeometrie aufweist, dass eine Stirnseitenöffnung Einschuböffnung für den zylindrischen Körper ist und dass gegenüberliegende Stirnseitenöffnung oder ein lösbares Zwischenstück mit einem Plattenelement verschließbar ist, das außenseitig in Längsrichtung des Innenraums verlaufend einen stiftförmigen Vorsprung zum Einspannen in ein Futter einer Bohrmaschine aufweist. Somit ist ein maschineller Antrieb der Vorrichtung möglich, wobei gleichzeitig das Plattenelement Anschlag in Bezug auf den zylindrischen Körper ist, also die Länge des abzuschälenden Bereichs vorgibt.

Um eine Verwendung des auch als Mitnehmerplatte zu bezeichnenden Plattenelementes für Gehäuse unterschiedlicher Innendurchmesser und damit auch grundsätzlich unterschiedlicher Außendurchmesser zu ermöglichen, ist vorzugsweise vorgesehen, dass das Plattenelement auf mehreren wie vier konzentrisch zueinander verlaufenden Kreisen Durchbrechungen zum Befestigen des Plattenelementes auf Gehäusen bzw. Zwischenstücken unterschiedlicher Innendurchmesser aufweist.

Es besteht die Möglichkeit, die Anzahl der auf konzentrisch zueinander verlaufenden Kreisen vorgesehenen Durchbrechungen und den Durchmesser der Mitnehmerplatte derart zu gestalten, dass Schälgehäuse für Rohrdurchmesser in mm von z. B. 20, 25, 32, 40 ,50, 36 oder 75, 90, 110 und 125 mit jeweils einer Mitnehmerplatte verbunden werden können. Mit anderen Worten ist die Mitnehmerplatte für mehrere Dimensionen von zu schälenden Rohren ausgelegt, wobei die Mitnehmerplatte gleichzeitig einen Tiefenanschlag für die abzuschälende Länge bildet. Die Mitnehmerplatte kann aus einem korrosionsbeständigen vergüteten Formenstahl bestehen.

Durch das Zwischenstück wird die Möglichkeit gegeben, das Gehäuse in axialer Richtung zu verlängern, um eine gewünschte Schällänge zu erreichen.

Um eine eindeutige Ausrichtung des Zwischenstückes auf das Gehäuse sicherzustellen, ist vorzugsweise vorgesehen, dass das Zwischenstück in seinem gehäuseseitig verlaufenden Stirnrand eine Zentrierstufe wie Passschräge aufweist.

Das Gehäuse und auch das Zwischenstück können aus Aluminium bestehen.

Um auch im Handbetrieb einen Schälvorgang durchzuführen, ist des Weiteren vorzugsweise vorgesehen, dass von dem Gehäuse bzw. dessen Umfangsfläche zwei diametral zueinander verlaufende insbesondere stabförmige Handhaben abragen.

In Einschubrichtung des Körpers hinter dem Schneidelement weist der Innenraum vorzugsweise einen Durchmesser D₄ auf, der größer als lichter Abstand zwischen Längsachse des Innenraums und Schneidabschnitt ist. Hierdurch ist sichergestellt, dass beim Verstellen des Körpers in den ersten Abschnitt hinein umfangsseitig ein Druck auf diesen nicht ausgeübt wird. Insbesondere ist vorgesehen, dass der Radius des vierten Abschnitts in etwa 0,05 bis 0,15 mm größer als der wirksame lichte Abstand zwischen der Längsachse des Innenraums und dem Schneidabschnitt liegt.

Weitere Einzelheiten, Vorteile und Merkmale der Erfindung ergeben sich auch aus der nachfolgenden Beschreibung von der Zeichnung zu entnehmenden bevorzugten Ausführungsbeispielen.

Es zeigen:
- Fig. 1: eine perspektivische Darstellung eines erfindungsgemäßen Schälgerätes,
- Fig. 2: eine weitere perspektivische Darstellung des Schälgerätes,
- Fig. 3: einen Querschnitt durch das Schälgerät,
- Fig. 4: einen Schnitt entlang der Linie H-H in Fig. 3,
- Fig. 5: einen Schnitt entlang der Linie J-J in Fig. 3,
- Fig. 6a), b): Ansichten einer Gehäuseverlängerung,
- Fig. 7: eine Mitnehmerplatte,
- Fig. 8: eine Detail des Schälgerätes im Bereich eines Schneidelementes und
- Fig. 9a) - c): verschiedene Darstellungen des Schälgerätes mit einzuschälendem Rohr.

In der Zeichnung, in der ggfs. gleiche Elemente mit gleichen Bezugszeichen gekennzeichnet sind, sind verschiedene Darstellungen einer als Schälgerät bezeichneten erfindungsgemäßen Vorrichtung 10 zum zumindest teilweisen Abtragen der Außenumfangsfläche eines zylindrischen Körpers, insbesondere eines aus Kunststoff bestehenden oder Kunststoff enthaltenden Rohres 11 dargestellt. Als Rohr kommen insbesondere sauerstoffdichte Rohre, ultraviolettstabilisierte Rohre oder z. B. eine Verstärkungsschicht wie Aluminiumschicht aufweisende Rohre in Frage.

Sollen Rohre mit z. B. einem Fitting oder eine Muffe verbunden wie verschweißt werden, ist es erforderlich, dass zuvor die Außenumfangsfläche in einem Umfang abgeschält wird, dass ein passgenaues Einsetzen in ein entsprechendes Anschlussstück möglich wird, um sodann insbesondere durch Schweißen oder Kleben eine dichte Verbindung herzustellen.

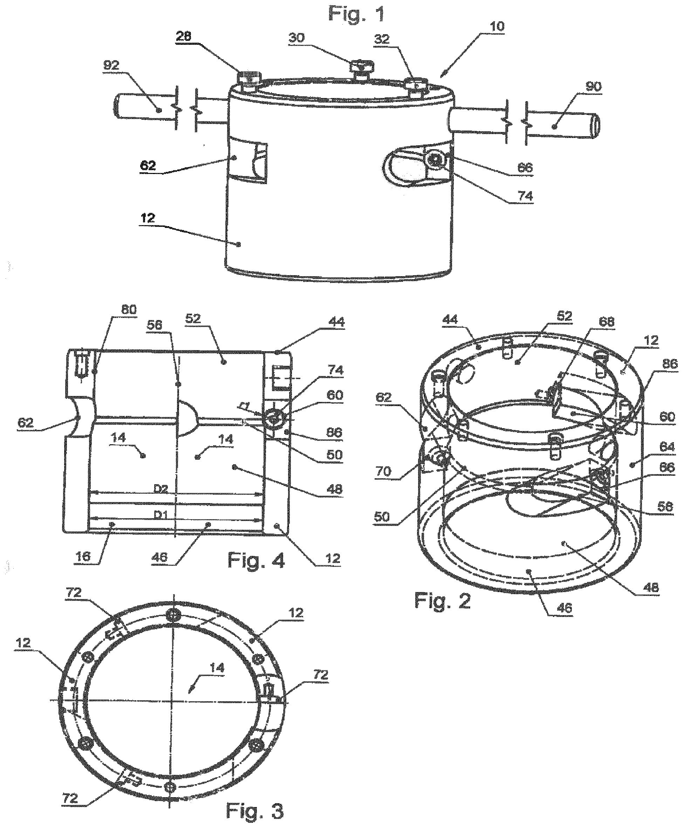

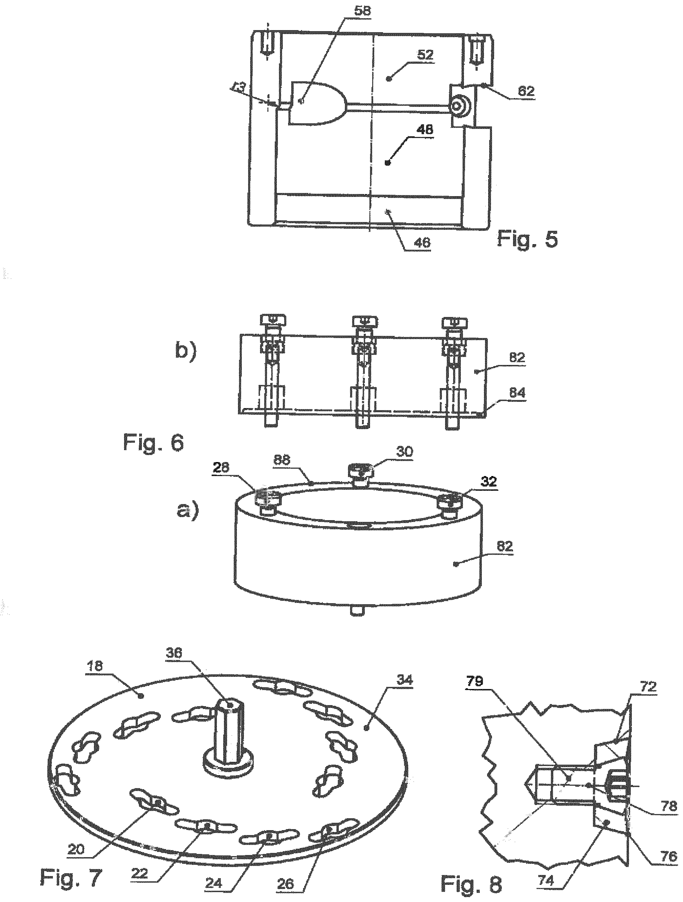

Das erfindungsgemäße Schälgerät 10 weist ein eine Hohlzylindergeometrie aufweisendes Gehäuse 12 mit einem Innenraum 14 auf, der in einem ersten Stirnbereich eine Eintrittsöffnung 16 aufweist, über den das zu schälende Rohr 11 eindringt. Die gegenüberliegende Öffnung des Gehäuses 12 wird von einer sogenannten Mitnehmerplatte 18 verschlossen. Diese weist auf konzentrisch zueinander verlaufenden Kreisen Längsaussparungen 20, 22, 24, 26 auf, die von Schulterpassschrauben 28, 30, 32 durchsetzbar sind, um die Mitnehmerplatte 18 mit dem Gehäuse 12 zu verbinden. Die Gestaltungen der Aussparung 20, 22, 24, 26 und die der Schulterpassschrauben 28, 30, 32 ergeben sich selbsterklärend aus den Fig. 1 und 7 und sollen verdeutlichen, dass ein und dieselbe Mitnehmerplatte 18 auf Schälgehäusen unterschiedlicher Abmessungen aufsetzbar und mit diesen verbindbar ist. Die Schälgehäuse unterschiedlicher Abmessungen weisen demzufolge ringförmige Stirnränder auf, deren Verläufe denen der Längsaussparungen 20 bzw. 22 bzw. 24 bzw. 26 entsprechen.

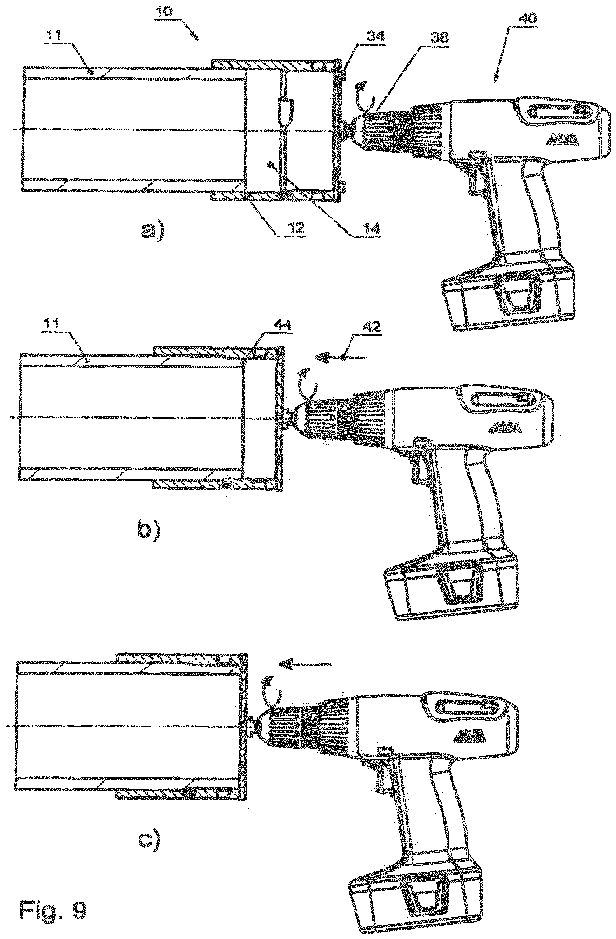

Von der Außenseite 34 der Mitnehmerplatte 18 ragt mittig ein sechskantförmiges Stabelement 36 ab, um dieses in ein Bohrfutter 38 einer Bohrmaschine 40 einsetzen zu können. Hierdurch besteht die Möglichkeit, das Schälgerät 10 zu drehen, um entsprechend der Darstellung der Fig. 9a) bis 9c) das Rohr 11 zu schälen.

Hierzu wird das Gehäuse 12 derart auf das Rohr 11 gesetzt, dass dieses in den Innenraum 14 geführt wird, um sodann in nachstehender Weise umfangsflächig abgeschält zu werden. Hierzu wird das Schälgerät 10 in axialer Richtung des Rohrs 11 in Richtung des Pfeils 42 verstellt. Der Schälvorgang ist dann abgeschlossen, wenn die geräteseitig verlaufende Stirnfläche 44 des Rohrs 11 an die Innenseite der Mitnehmerplatte 34 stößt, wie sich aus der Fig. 9c) ergibt.

Wie insbesondere den Fig. 2, 4 und 5 verdeutlichen, ist der Innenraum 14 des Gehäuses 12 in vier Abschnitte unterteilt, und zwar in einen eintrittsseitigen Abschnitt 46 als ersten Abschnitt, der einen Durchmesser D₁ aufweist, einen sich anschließenden zweiten Abschnitt 48 mit einem Durchmesser D₂ mit D₂ > D₁, einen sich anschließenden dritten Abschnitt 50 und einen vierten Abschnitt 52, der sich bis zum stirnseitigen Ende 44 erstreckt.

Verlaufen die Innenflächen des ersten, zweiten und vierten Abschnitts parallel zur Längsachse 56 des Gehäuses 12 und damit des Schälgeräts 10, so weist der dritte Abschnitt 50 im Schnitt eine zum Gehäuseinneren konvexen Verlauf auf, der im Schnitt einen Kreisabschnitt mit einem Radius r₃ bildet.

Im Bereich des dritten Abschnitts 50 und sich teilweise sowohl im zweiten als auch im vierten Abschnitt 48 bzw. 52 erstreckend, verlaufen schlitzförmige Durchbrechungen 58, 60, 62, die sich vom Gehäuseinneren 14 zum Äußeren hin erstrecken. Die Durchbrechungen 58, 60, 62 durchsetzen die Wandung 64 schräg, also nicht radial, quasi tangentialartig. Die Durchbrechungen 58, 60, 62 weisen jeweils in einer Stirnseite von der Wandung 64 des Gehäuses 12 gebildete Begrenzungen 66, 68, 70 auf, in denen jeweils eine als Flachsenkung bezeichnete Tasche 72 zur passgenauen Aufnahme eines einstückigen Schneidelements 74 vorgesehen ist, das die Geometrie eines Hohlkonus aufweist, wie die Fig. 8 verdeutlicht. Das Schneidelement 74 weist folglich in Draufsicht eine Kreisringgeometrie auf, wobei der Umfangsrand 76 als Schneide wirkt. Das Schneidelement 74 ist über eine Schraube 78 in der Tasche 72 fixiert, wobei die Schraube in die Wandung 64 einschraubbar ist. Das Schneidelement 74 ist zu dem zum Innenraum 14 hin durch einen Kreisbogen begrenzten dritten Abschnitt 50 derart angeordnet, dass die Außenfläche des Abschnitts 50, also der Kreisbogen, äquidistant zu dem sich innerhalb des Innenraums 14 erstreckenden Rand des Schneidelements 74 verläuft, jedoch einen kleineren Radius r₃ aufweist, wobei die Differenz der Radien r₃, r₁ zwischen 0,05 mm und 0,15 mm liegt und r₁ der Radius des Umfangsrades 76 des Schneidelements 74 ist.

Mit anderen Worten steht der das Abschälen ermöglichende Abschnitt des Schneidelements 74 über dem dritten Abschnitt 50 vorzugsweise zwischen 0,05 mm und 0,15 mm über der Innenfläche des Innenraums 14 vor. Um die geometrische Ausrichtung von dem dritten Abschnitt 50 und dem Schneidelement 74 sicherzustellen, ist vorgesehen, dass Mittelpunkt des im Schnitt einen Kreisabschnitt aufweisenden dritten Abschnitts 50 und Mittelpunkt des Schneidabschnitts auf einem Kreis liegen, dessen Mittelpunkt auf der Längsachse 56 des Gehäuses 12 liegt.

Die Stirnfläche des Schneidelements 76 verläuft in der Ebene eines Längsschnitts des Gehäuses 12, in dem die Längsachse 56 liegt.

Die wirksame Umfangslänge des Schneidabschnitts selbst beläuft sich insbesondere auf kleiner als r_{1 •} π/2. Auch die Bogenlänge des dritten Abschnitts 50 sollte kleiner als < r_{3 •} π/2 sein.

Wie sich aus der zeichnerischen Darstellung insbesondere der Fig. 4 und 5 ergibt, geht die Innenwandung 80 des vierten Abschnitts 52 tangential in den dritten Abschnitt 50 über und verläuft parallel zur Längsachse 56 des Gehäuses 12.

Der Durchmesser D₁ des äußeren oder ersten Abschnitts 46 ist geringfügig kleiner als der des sich anschließenden zweiten Abschnitts 48, um die Möglichkeit zu bieten, dass sich das über die Öffnung und somit in den ersten Abschnitt 46 eindringende Rohr 11 im zweiten Abschnitt 48 entspannen kann, so dass eine gegebenenfalls ursprüngliche vorhandene Ovalität zurückkehrt. Hierdurch ist sichergestellt, dass nach dem Schälvorgang, der im Bereich des dritten Abschnitts 50 erfolgt, eine optimale Rundheit des Schälergebnisses erzielbar ist. Hierzu tragen auch die gleichmäßig auf den Umfang verteilten drei Schneidelemente 74 bei, die in Abstand von 120° zueinander verlaufen.

Der Innendurchmesser D₄ des vierten Abschnitts 52 ist geringfügig größer als das Schälergebnis, also der wirksame Durchmesser des von den Schneidelementen 74 aufgespannten Kreises. Der Durchmesser D₄ ist dabei in etwa 0,1 mm bis 0,3 mm größer. Hierdurch wird vermieden, dass auf das Rohr ein Druck ausgeübt wird. Ungeachtet dessen ist jedoch der vierte Abschnitt 52 Führung für das Rohr 11 beim Vorschub in das Gehäuse 12.

Ist der das Schälen bewirkende Abschnitt des Schneidelements 74 abgestumpft, so ist es nur erforderlich, dass die Schraube 78 gelockert wird, um das Schneidelement 74 in der Tasche 72 im erforderlichen Umfang zu drehen und sodann die Schraube 78 erneut festzuziehen. Da das Schneidelement 74 passgenau in der Tasche 72 angeordnet ist, ist auch nach Drehen des Schneidelements 74 sichergestellt, dass das gewünschte Schälergebnis erzielt wird.

Um gegebenenfalls unterschiedliche Längen des Rohres 11 zu schälen, kann auf die Stirnfläche 44 des Gehäuses 12 ein hohlzylindrisches Verlängerungsstück 82 aufgesetzt werden. Zur Zentrierung weist das Zwischenstück in seinem gehäuseseitigen Stirnbereich eine als Passschräge dienende Stufe 84 und der Stirnbereich des Gehäuses 12 einen geometrisch angepassten Absatz 86 auf. Die Verbindung erfolgt vorzugsweise über Innensechskantschrauben, ohne dass es näherer Erläuterungen bedarf.

Zum Befestigen des Zwischenstücks 82 mit der Mitnehmerplatte 34 gehen vom Stirnrand 88 des Zwischenstücks 82 in zuvor beschriebener Weise Schulterpassschrauben 28, 30, 32 aus, die die auf eine der konzentrisch zueinander verlaufenden Kreisen angeordneten Schlitze 20 bzw. 22 bzw. 24 bzw. 26 der Mitnehmerplatte 34 durchsetzen, um sodann durch Drehen der Mitnehmerplatte 34 fixiert werden zu können, da die Köpfe der Schulterpassschrauben 28, 30, 32 sodann seitlich neben den Schlitzen 20, 22, 24, 26 an der Außenseite der Außenfläche 34 der Mitnehmerplatte 18 aufliegen. Entsprechende Zwischenstücke 82 werden insbesondere dann benutzt, wenn die Rohre zum Verschweißen vorbereitet werden, um eine hinreichende Länge der abgeschälten Außenumfangsfläche zur Verfügung zu stellen.

Das Schälgerät 10 ist jedoch nicht nur motorisch, sondern auch von Hand betätigbar. Dies verdeutlicht die Fig. 1. So ragen von der Außenfläche des Gehäuses 12 zwei diametral zueinander verlaufende stabförmige und als Knebel zu bezeichnende Handhaben 90, 92 ab, mittels derer das Gehäuse 12 gegenüber ein Rohr drehbar ist. Insbesondere bei Handbetrieb besteht die Möglichkeit, dass quasi ein Körper wie Rohr über eine beliebige Länge geschält werden kann, da in diesem Fall die Mitnehmerplatte 34 nicht benötigt wird.

## Patentansprüche

1. Vorrichtung (10) zum zumindest teilweisen Abtragen der Außenumfangsfläche eines zylindrischen Körpers (11), insbesondere eines aus Kunststoff bestehenden oder Kunststoff enthaltenden Rohres, umfassend ein insbesondere hohlzylindrisches Gehäuse (12), dessen Wandung (64) einen den Körper axial verschiebbar aufnehmenden zylindrischen Innenraum (14) begrenzt, zumindest eine Durchbrechung (58, 60 62) in der Wandung sowie ein der Durchbrechung (58, 60, 62) zugeordnetes Schneidelement (74), das sich mit einem Schneidabschnitt in den Innenraum hinein erstreckt, wobei das Schneidelement (74) in Vorderansicht eine Scheiben- oder Ringgeometrie aufweist und über ein in Längsachsenrichtung des Schneidelements verlaufendes Befestigungselement (78) mit dem Gehäuse (12) verbunden ist und durch Drehen um seine Längsachse (79) in gewünschter Position mit dem Gehäuse verbindbar ist,
**dadurch gekennzeichnet,**
**dass** ein in Verstellrichtung des zylindrischen Körpers (11) vor dem Schneidelement (74) verlaufender Abschnitt (48) des Innenraums (14) einen Innendurchmesser D₂ aufweist, der in einen dritten Abschnitt (50) übergeht, dessen innenraumseitige Begrenzung im Schnitt einen Kreisabschnitt bildet, dessen Umfang äquidistant zum Umfang des Schneidelements (74) zumindest im Bereich des Schneidabschnitts verläuft.

2. Vorrichtung nach Anspruch 1,
**dadurch gekennzeichnet,**
**dass** das Schneidelement (74) einstückig und rotationssymmetrisch ausgebildet ist, insbesondere eine Hohlkonusgeometrie aufweist, deren größere Grundfläche bzw. Rand (76) der größeren Grundfläche Schneide ist.

3. Vorrichtung nach Anspruch 1 oder 2,
**dadurch gekennzeichnet,**
**dass** die Durchbrechung (58, 60, 62) von einer das Schneidelement (74) passgenau aufnehmenden Aufnahme (72) begrenzt ist, wobei das Schneidelement (74) passgenau in der Aufnahme wie Sitz (72) angeordnet ist.

4. Vorrichtung nach zumindest einem der vorherigen Ansprüche,
**dadurch gekennzeichnet,**
**dass** um den Umfang des Gehäuses (12) gleichmäßig verteilt drei schlitzförmige Durchbrechungen (58, 60, 62) vorgesehen sind, die vorzugsweise eine hohlzylinder- oder schlitzförmige Geometrie aufweisen und deren Längsachsen quer bzw. senkrecht zur Längsachse (56) des Gehäuses (12) verlaufen.

5. Vorrichtung nach Anspruch 1,
**dadurch gekennzeichnet,**
**dass** das Gehäuse (12) körpereintrittsseitig einen ersten Abschnitt (46) mit einem Durchmesser D₁ aufweist, der kleiner als der Durchmesser D₂ des angrenzenden zweiten Abschnitts (48) ist.

6. Vorrichtung nach Anspruch 1,
**dadurch gekennzeichnet,**
**dass** ein in Verstellrichtung des zylindrischen Körpers (11) nach dem Schneidelement (74) verlaufender vierter Abschnitt (52) des Innenraums (14) einen Durchmesser D₄ aufweist, wobei D₄/2 größer als wirksamer lichter Abstand zwischen der Längsachse (56) des Gehäuses (12) und dem Schneidabschnitt ist.

7. Vorrichtung nach zumindest einem der vorherigen Ansprüche,
**dadurch gekennzeichnet,**
**dass** Mittelpunkt des im Schnitt einen Kreisabschnitt aufweisenden dritten Abschnitts (50) und Mittelpunkt des Schneidabschnitts auf einem Kreis liegen, dessen Mittelpunkt auf der Längsachse (56) des Gehäuses (12) liegt.

8. Vorrichtung nach zumindest einem der vorherigen Ansprüche,
**dadurch gekennzeichnet,**
**dass** der Kreisabschnitt des dritten Abschnitts (50) einen Radius r₃ und das Schneidelement in seiner die Schneide (76) aufweisenden Stirnfläche einen Radius r₁ aufweist, wobei 0,85 r₁ ≤ r₃ ≤ 0,05 r₁ ist.

9. Vorrichtung nach zumindest einem der vorherigen Ansprüche,
**dadurch gekennzeichnet,**
**dass** das einen Hohlzylinder bildende bzw. eine Hohlzylindergeometrie aufweisende Gehäuse (12) in seinem der Eintrittsöffnung für den zylindrischen Körper (11) gegenüberliegenden Stirnseitenbereich (44) unmittelbar oder über ein lösbares Zwischenstück (82) mit einem Plattenelement (18) verschließbar ist.

10. Vorrichtung nach zumindest einem der vorherigen Ansprüche,
**dadurch gekennzeichnet,**
**dass** das Plattenelement (18) außenseitig und in Verlängerung der Längsachse (56) des Gehäuses (12) einen stiftförmigen Vorsprung (36) zum Einspannen in ein Futter (38) einer Bohrmaschine (40) aufweist.

11. Vorrichtung nach zumindest einem der vorherigen Ansprüche,
**dadurch gekennzeichnet,**
**dass** das Plattenelement (18) Durchbrechungen (20, 22, 24, 26) aufweist, die auf konzentrisch zueinander verlaufenden Kreisen angeordnet sind zum Befestigen des Plattenelements (18) auf Gehäusen (12) bzw. Zwischenstücken (82) unterschiedlicher Abmessungen.

12. Vorrichtung nach zumindest einem der vorherigen Ansprüche,
**dadurch gekennzeichnet,**
**dass** das insbesondere eine Hohlzylindergeometrie aufweisende Zwischenstück (82) in seinem auf dem Gehäuse (12) abgestützten Stirnbereich eine Zentrierstufe (84) wie Passschräge aufweist.

13. Vorrichtung nach zumindest einem der vorherigen Ansprüche,
**dadurch gekennzeichnet,**
**dass** von dem Gehäuse (12) bzw. dessen Umfangsfläche zwei diametral zueinander verlaufende insbesondere stabförmige Handhaben (90, 92) ausgehen.

## Claims

1. A device (10) for the at least partial removal of the outer circumferential surface of a cylindrical body (11), in particular a pipe consisting entirely or partially of plastic, comprising an in particular hollow-cylindrical housing (12), whose wall (64) surrounds a cylindrical interior space (14) that accommodates the body in an axially moveable manner, at least one opening (58, 60 62) in the wall, as well as one cutting element (74) that is associated with the opening (58, 60, 62) and with its cutting section projects into the interior space, wherein the cutting element (74) in a front view exhibits a disc or ring geometry and is connected to the housing (12) by a fastening element (78) that extends along the direction of the longitudinal axis of the cutting element, whereby the cutting element can be fastened to the housing in the desired position by rotating it about its longitudinal axis (79),
**characterized in that**
a second section (48) of the interior space (14) extending in the direction of movement of the cylindrical body (11) upstream of the cutting element (74), possesses an inside diameter D2, which merges into a third section (50), whose boundary towards the interior space possesses a circular-segment cross-section, whose circumference extends equidistant to the circumference of the cutting element (74) at least in the region of the cutting section.

2. The device according to claim 1,
**characterized in that**
the cutting element (74) is embodied as a single part and is rotationally symmetric, and possesses in particular a hollow cone geometry, with the larger base area or the edge (76) of the larger base area acting as the cutting edge.

3. The device according to claim 1 or 2,
**characterized in that**
the opening (58, 60, 62) is bordered by a seat (72) that accepts the cutting element (74) with a precise fit, whereby the cutting element (74) is arranged with a precise fit in the receptacle such as a seat (72).

4. The device according to at least one of the previous claims,
**characterized in that**
uniformly distributed around the circumference of the housing (12) are provided three slotted openings (58, 60, 62), which preferably possess a hollow cylindrical or slot-like geometry and whose longitudinal axes extend obliquely or perpendicular relative to the longitudinal axis (56) of the housing (12).

5. The device according to at least one of the previous claims,
**characterized in that**
the housing (12) on its body-intake side comprises a first section (46) with a diameter D1, which is smaller than the diameter D2 of the following second section (48).

6. The device according to at least one of the previous claims,
**characterized in that**
a fourth section (52) of the interior space (14), extending downstream of the cutting element (74) as seen along the direction of movement of the cylindrical body (11), possesses a diameter D4, whereby D4/2 is greater than the effective clearance between the longitudinal axis (56) of the housing (12) and the cutting section.

7. The device according to at least one of the previous claims,
**characterized in that**
the centre of the third section (50), which possesses a circle-segment cross-section, and the centre of the cutting section are situated on a circle, the centre of which is situated on the longitudinal axis (56) of the housing (12).

8. The device according to at least one of the previous claims,
**characterized in that**
the circular segment of the third section (50) has a radius r3 and the front face of the cutting element that houses the blade (76) has a radius r1, whereby 0.85 r1≦r3≦0.05 r1.

9. The device according to at least one of the previous claims,
**characterized in that**
the housing (12), which forms a hollow cylinder or possesses a hollow-cylinder geometry, on its end surface region (44) that is opposite to the intake opening for the cylindrical body (11), can be closed directly, or after attaching a detachable intermediate piece (82), by a plate element (18).

10. The device according to at least one of the previous claims,
**characterized in that**
on its exterior side and in extension of the longitudinal axis (56) of the housing (12), the plate element (18) possesses a key-shaped projection (36) to facilitate loading into a drill chuck (38) of a power drill (40).

11. The device according to at least one of the previous claims,
**characterized in that**
the plate element (18) comprises openings (20, 22, 24, 26), which are arranged on concentric circles to facilitate fastening the plate element (18) to housings (12) or intermediate pieces (82) of various dimensions.

12. The device according to at least one of the previous claims,
**characterized in that**
the intermediate piece (82), which possesses in particular a hollow cylinder geometry, exhibits in its front region, which rests against the housing (12), a centering step (84) such as a centering slope.

13. The device according to at least one of the previous claims,
**characterized in that**
from the housing (12), i.e. its circumferential surface, originate in diametrically opposed directions two in particular rod-shaped handles (90, 92).

## Revendications

1. Dispositif (10) pour enlever au moins partiellement la surface circonférentielle extérieure d'un corps cylindrique (11), notamment d'un tube constitué de plastique ou contenant du plastique, comprenant un boîtier (12) notamment en forme de cylindre creux dont la paroi (64) délimite un espace intérieur (14) cylindrique accueillant le corps de manière axialement déplaçable, au moins une percée (58, 60, 62) dans la paroi ainsi qu'un élément de coupe (74) associé à la percée (58, 60, 62) et qui s'étend par une section de coupe à l'intérieur de l'espace intérieur, sachant que l'élément de coupe (74) présente une géométrie en forme de disque ou d'anneau en vue avant et est relié au boîtier (12) par le biais d'un élément de fixation (78) s'étendant dans le sens de l'axe longitudinal de l'élément de coupe et est reliable au boîtier dans la position souhaitée, par une rotation autour de son axe longitudinal (79),
**caractérisé en ce**
**qu'**une section (48) de l'espace intérieur (14) s'étendant avant l'élément de coupe (74) dans le sens de réglage du corps cylindrique (11) présente un diamètre intérieur D₂ qui rejoint une troisième section (50) dont la délimitation côté espace intérieur forme en coupe une section circulaire dont la circonférence est équidistante de la circonférence de l'élément de coupe (74) au moins dans la zone de la section de coupe.

2. Dispositif selon la revendication 1,
**caractérisé en ce**
**que** l'élément de coupe (74) est conçu en un seul élément et est rotosymétrique, qu'il présente notamment une géométrie en forme de cône creux dont la plus grande aire de base ou le bord (76) de la plus grande aire de base est la lame.

3. Dispositif selon la revendication 1 ou 2,
**caractérisé en ce**
**que** la percée (58, 60, 62) est délimitée par un logement (72) accueillant de manière ajustée l'élément de coupe (74), sachant que l'élément de coupe (74) est disposé de manière ajustée dans le logement tel un siège (72).

4. Dispositif selon au moins une des revendications précédentes,
**caractérisé en ce**
**que** sont réparties uniformément autour de la circonférence du boîtier (12) trois percées en forme de fente (58, 60, 62) qui présentent de préférence une géométrie en forme de cylindre creux ou de fente et dont les axes longitudinaux s'étendent transversalement ou perpendiculairement à l'axe longitudinal (56) du boîtier (12).

5. Dispositif selon la revendication 1,
**caractérisé en ce**
**que** le boîtier (12) présente, côté de l'entrée du corps, une première section (46) avec un diamètre D₁ qui est inférieur au diamètre D₂ de la seconde section adjacente (48).

6. Dispositif selon la revendication 1,
**caractérisé en ce**
**qu'**une quatrième section (52) de l'espace intérieur (14) s'étendant après l'élément de coupe (74) dans le sens de réglage du corps cylindrique (11) présente un diamètre D₄, sachant que D₄/2 est supérieur à l'écart intérieur effectif entre l'axe longitudinal (56) du boîtier (12) et la section de coupe.

7. Dispositif selon au moins une des revendications précédentes,
**caractérisé en ce**
**que** le centre de la troisième section (50) présentant en coupe une section circulaire et le centre de la section de coupe se situent sur un cercle dont le centre se situe sur l'axe longitudinal (56) du boîtier (12).

8. Dispositif selon au moins une des revendications précédentes,
**caractérisé en ce**
**que** la section circulaire de la troisième section (50) présente un rayon r₃ et l'élément de coupe présente un rayon r₁ dans sa surface frontale présentant la lame (76), tel que 0,85 r₁ ≤ r₃≤ 0,05 r₁.

9. Dispositif selon au moins une des revendications précédentes,
**caractérisé en ce**
**que** le boîtier (12) formant un cylindre creux ou présentant une géométrie en forme de cylindre creux est fermable, directement ou par le biais d'une pièce intermédiaire amovible (82) au moyen d'un élément à plaque (18) dans sa zone frontale (44) opposée à l'orifice d'entrée pour le corps cylindrique (11).

10. Dispositif selon au moins une des revendications précédentes,
**caractérisé en ce**
**que** l'élément à plaque (18) présente, sur le côté extérieur et dans le prolongement de l'axe longitudinal (56) du boîtier (12), une saillie (36) en forme de tige à serrer dans le porte-foret (38) d'une perceuse (40).

11. Dispositif selon au moins une des revendications précédentes,
**caractérisé en ce**
**que** l'élément à plaque (18) présente des percées (20, 22, 24, 26) qui sont disposées sur des cercles concentriques les uns par rapport aux autres pour fixer l'élément à plaque (18) sur des boîtiers (12) ou des pièces intermédiaires (82) de différentes dimensions.

12. Dispositif selon au moins une des revendications précédentes,
**caractérisé en ce**
**que** la pièce intermédiaire (82) présentant notamment une géométrie en forme de cylindre creux présente un redent de centrage (84), tel un chanfrein d'ajustage, dans sa zone frontale appuyée sur le boîtier (12).

13. Dispositif selon au moins une des revendications précédentes,
**caractérisé en ce**
**que** deux poignées (90, 92) notamment en forme de tige s'étendant l'une vers l'autre diamétralement partent du boîtier (12) ou de sa surface circonférentielle.
